# EUROPEAN PATENT APPLICATION

(11) **EP 1 759 575 A2**
(43) Date of publication of application: **07.03.2007**
(21) Application number: 06252839.3
(22) Date of filing: 01.06.2006
(51) Int. Cl.: A01D 43/063

(54) **Lawnmower**

(30) Priority: 31.08.2005 GB 0517723
(71) Applicant: Husqvarna UK Limited, County Durham, DL5 6UP (GB)
(72) Inventor: Blackburn, Richard M., County Durham DL5 6GQ (GB); Stockley, Paul, County Durham DL5 6SA (GB)
(74) Representative: Pratt, David Martin

(57) **Abstract**

A lawnmower comprises a deck (1) defining a cutting chamber (3) open to ground datum. A chute leads from the cutting chamber (3) to an exit aperture formed in the deck (1). A grass-box (9) having an entry opening (9a) for admitting cut grass is detachably mounted to the deck (1) with its entry opening in alignment with the exit aperture. A flexible liner (11) is positioned within the grass-box (9) for collecting cut grass. A fan (7) is in fluid communication with an aperture (9b) provided in a wall of the grass-box (9), whereby, in use, the pressure outside the liner (11) is less than the pressure inside the liner.

## Description

This invention relates to a lawnmower having a grass-box located behind the cutting chamber of the lawnmower.

A known lawnmower has a deck defining a cutting chamber which houses a cutter. Grass cut by the cutter is ejected rearwardly together with a stream of air generated by movement of the cutter. This stream of air and cut grass leaves the cutting chamber, via a chute, and is directed into a grass-box which is a positioned behind the cutting chamber. This type of lawnmower is known as a rear-collect lawnmower. A rear-collect lawnmower may be provided with an impeller (fan) for sucking air from the grass-box, thereby to improve the collection performance of the lawnmower by compacting the cut grass within the grass-box.

A conventional rear-collect lawnmower has a lift-off grass-box which is hung by its front top edge to the deck of the lawnmower. In order to meet legal requirements, a sprung safety flap is used to cover the exit chute when the grass-box is not fitted to the lawnmower. This flap is usually hinged and sprung from its top edge, requiring the user to hold the flap in the upper position with one hand whilst fitting the grass-box with the other hand. When the grass-box is full, the user must remove the grass-box from the lawnmower and empty the cut grass on to a compost heap or into a container such as a bin or a bin liner. This is inconvenient, and often leaves grass clippings on the ground.

The specification of our European patent application 1425955 describes a lawnmower in which cut grass is collected in a liner (bag) located inside a grass-box. The advantage of this arrangement is that, when the liner is full, it can be lifted from the grass-box with a reduced risk of grass clippings falling to the ground. This is particularly the case where the neck of the liner can be tied in a knot, thereby closing the liner, before the liner is removed from the grass-box. This lawnmower is a hover lawnmower having the grass-box located above its deck.

Within the liner of this lawnmower, there is a positive pressure due to the airstream leaving the cutting chamber (which carries cut grass clippings), and a negative pressure due to the air which is drawn from the grass-box to improve the collection performance. Initially, the airflows are such that they largely balance or produce a slightly positive pressure within the liner inside the grass-box. As grass is collected, however, the entry aperture to the grass-box can become restricted or blocked with grass, substantially reducing the airflow into the grass-box. As this airflow decreases, the pressure within the liner becomes negative, causing the liner to collapse inwardly.

An aim of the invention is to provide a rear-collect lawnmower whose grass-box incorporates a liner, thereby facilitating disposal of grass-clippings whilst minimising the risk of grass clippings being deposited on the ground.

Another aim of the invention is to provide a lawnmower which ensures that a liner housed within its grass-box does not collapse inwardly as air is drawn from the grass-box to improve the collection performance of the lawnmower.

The present invention provides a lawnmower comprising a deck defining a cutting chamber open to ground datum, an exit aperture for directing cut grass away from the cutting chamber, a grass-box having an entry opening for admitting cut grass, the grass-box being detachably mounted to the deck with its entry opening in alignment with the exit aperture, a flexible liner positioned within the grass-box for collecting cut grass, and a fan in fluid communication with an aperture provided in a wall of the grass-box, whereby, in use, the pressure outside the liner is less than the pressure inside the liner, and an impeller in fluid communication with the entry opening of the grass-box for extracting air from the interior of the grass-box.

Preferably, the exit aperture is provided in the deck, and a chute leads from the cutting chamber exit to the exit aperture.

Advantageously, the fan is a radial fan.

The lawnmower may further comprise motor in drivable engagement with the fan. Preferably, the fan is fixed to an output drive shaft of the motor.

Preferably, the lawnmower further comprises a rotatable cutting member mounted within the cutting chamber, and the motor is in drivable engagement with the cutting blade.

Preferably, the impeller is a high-volume-flow radial fan.

Advantageously, the motor is in drivable engagement with the impeller.

Preferably, the deck is provided with an air entry aperture through which air is drawn by the impeller from the interior of the grass-box. In this case, the lawnmower may further comprise a mesh screen positioned over the air entry aperture.

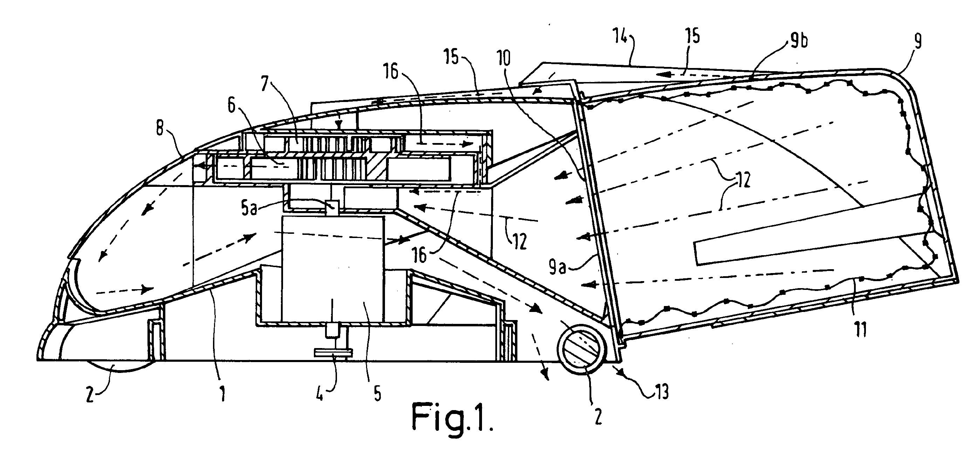

A lawnmower constructed in accordance with the invention will now be described in greater detail, by way of example, with reference to the drawings, in which:-
Figure 1 is a part-sectional side elevation of the lawnmower;
Figure 2 is a perspective view of the lawnmower; and
Figure 3 is a plan view of the lawnmower.

Referring to the drawings, a wheeled rotary lawnmower has a deck 1 supported by wheels 2. The deck 1 defines a cutting chamber 3 which is open to ground datum. A cutting blade 4 is mounted in the cutting chamber for rotation about a substantially vertical axis. A motor 5 is mounted on the deck 1, the motor having a drive shaft 5a in drivable engagement with the cutting blade 4. The motor drive shaft 5a is also in drivable engagement with an impeller 6 and a fan 7 which are positioned above the motor 5 within a hood 8 forming a cover for the lawnmower. The impeller 6 and the fan 7 are both radial fans.

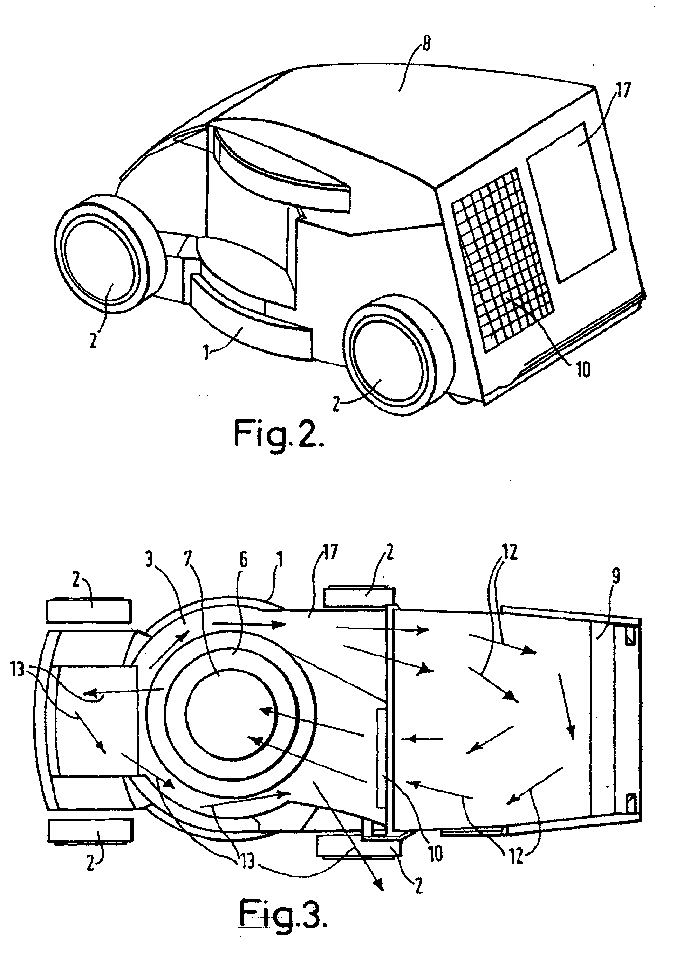

The cutting blade 4 is formed with up-turned tips (not shown), so that rotation of the cutting blade generates an air flow which carries grass cut by the blade towards a chute (not shown) which connects the cutting chamber 3 to an exit aperture 17 (see Figure 2) at the rear of the deck 1.

A rigid grass-box 9 is provided at the rear of the lawnmower, the grass-box being hung from its front top edge to the rear of the lawnmower. In use, grass cut by the cutting blade 4 exits the cutting chamber 3 in the air flow generated by the cutting blade, travels along the chute, exits the deck 1 via the exit aperture 17, and enters the grass-box 9. A sprung safety flap (not shown) is used to cover the chute when the grass-box 9 is not fitted to the lawnmower. As is usual, this flap is hinged and sprung from its top edge, and so must be lifted away from the chute before the grass-box 9 can be fitted to the lawnmower. A mesh screen 10 is provided at the rear of the lawnmower, the mesh screen being positioned within an air entry aperture 10a formed at the rear of the deck 1. A bag 11 constituted by a bin liner is positioned inside the grass-box 9, the free end of the bin liner being wrapped over the rim of the grass-box at the open end 9a thereof. Apart from its open end 9a, the grass-box 9 is completely closed, having solid side and rear end walls.

The impeller 6 creates a sub-atmospheric pressure within the grass-box 9 and sucks air from the grass-box via the air entry aperture 10a, the mesh screen 10 allowing air to pass through, but preventing cut grass from being withdrawn from the grass-box. This flow is indicated by the arrows 12. The action of the impeller 6 greatly improves the collection performance of the lawnmower, owning to compaction of the cut grass within the grass-box 9. The air extracted from the grass-box 9 passes through the impeller 9, and is then exhausted to atmosphere as shown by the arrows 13. This exit air flow is used to cool the motor 5 prior to being exhausted below the rear of the deck 1.

The fan 7 is connected by means of a duct 14 to an aperture 9b formed in the top of the grass-box 9. The fan 7 creates a sub-atmospheric pressure within the grass-box 9 at its periphery thereby preventing the bag 11 from collapsing within the grass-box 9. The fan 7 is a high-pressure fan which ensures that the sub-atmospheric pressure created around the bag 11 provides a pressure difference between the inside and the outside of the bag so that the pressure outside the bag is always lower than the pressure inside the bag. This guarantees bag inflation, to conform with the internal walls of the grass-box 9, under all conditions. The duct 14 sucks air from outside the bag 11 to the inlet of the fan 7, as shown by the arrows 15. The exhaust air from the fan 7 is then fed to the inlet of the impeller 6, as shown by the arrows 16. This ensures that the air flow paths within the lawnmower are simplified. Alternatively, the exhaust air could be directed to any point inside or outside the deck 1.

It will be apparent that modifications could be made to the lawnmower described above. Thus, instead of driving the impeller 6, the fan 7 and the cutting blade 4 directly by attachment to the motor drive shaft, one or more of these items could be driven indirectly by means of a drive belt and pulleys mounted on the motor drive shaft and on a driven shaft provided for that item. It would also be possible to provide separate motors for these three items, in order to provide each with the desired rotational speed to optimise flow and pressure from the impeller 6 and the fan 7, and the blade speed for optimum cutting performance.

It would also be possible to amount the impeller 6 and/or the fan 7 below the deck 1 rather than above the deck as shown in the figure. In a further development, a single fan could be used instead of the impeller 6 and the fan 7, this fan being provided with a high-pressure differential, low-flow take-off for bag inflation and with a high-flow take-off for bag air evacuation. Moreover, although the impeller 6 and the fan 7 are fans, it would also be possible to use other forms of fan, for example a radial fan or a sliding vane fan. Furthermore, the lawnmower could be modified by providing more than two fans. For example three fans could be provided, one for bag evacuation, one for bag inflation, and one for cooling the motor 5.

## Claims

1. A lawnmower comprising a deck defining a cutting chamber open to ground datum, an exit aperture for directing cut grass away from the cutting chamber, a grass-box having an entry opening for admitting cut grass, the grass-box being detachably mounted to the deck with its entry opening in alignment with the exit aperture, a flexible liner positioned within the grass-box for collecting cut grass, a fan in fluid communication with an aperture provided in a wall of the grass-box, whereby, in use, the pressure outside the liner is less than the pressure inside the liner, and an impeller in fluid communication with the entry opening of the grass-box for extracting air from the interior of the grass-box.

2. A lawnmower as claimed in claim 1, wherein the exit aperture is provided in the deck, and a chute leads from the cutting chamber exit to the exit aperture.

3. A lawnmower as claimed in claim 1 or claim 2, wherein the fan is a radial fan.

4. A lawnmower as claimed in any one of claims 1 to 3, further comprising a motor in drivable engagement with the fan.

5. A lawnmower as claimed in claim 4, wherein the fan is fixed to an output drive shaft of the motor.

6. A lawnmower as claimed in claim 4 or claim 5, wherein the motor is in drivable engagement with the impeller.

7. A lawnmower as claimed in any one of claims 1 to 6, further comprising a rotatable cutting member mounted within the cutting chamber.

8. A lawnmower as claimed in claim 7 when appendant to claim 4, wherein the motor is in drivable engagement with the cutting blade.

9. A lawnmower as claimed in any one of claims 1 to 8, wherein the impeller is a high-volume-flow radial fan.

10. A lawnmower as claimed in any one of claims 1 to 9, wherein the deck is provided with an air entry aperture through which air is drawn by the impeller from the interior of the grass-box.

11. A lawnmower as claimed in claim 10, further comprising a mesh screen positioned over the air entry aperture.

12. A lawnmower as claimed in any one of claims 1 to 11, wherein a single fan constitutes said fan and the impeller, the single fan being provided with a high-pressure differential, low-flow take-off in fluid communication with the aperture in the grass-box wall, and with a high-flow take-off in fluid communication with the grass-box entry opening.

13. A lawnmower substantially as hereinbefore described with reference to, and as illustrated by, the drawings.
